# EUROPÄISCHE PATENTSCHRIFT

(11) **EP 2 601 540 B1**
(45) Veröffentlichungstag und Bekanntmachung des Hinweises auf die Patenterteilung: **31.08.2016**
(21) Anmeldenummer: 11741423.5
(22) Anmeldetag: 20.07.2011
(51) Int. Cl.: G01S 7/527, G01S 7/537, G01S 15/10, G01S 15/87, G01S 13/93, G01S 15/93

(54) **VERFAHREN ZUM BETREIBEN EINES ULTRASCHALLSENSORS EINES FAHRERASSISTENZSYSTEMS IN EINEM KRAFTFAHRZEUG, FAHRERASSISTENZSYSTEM UND KRAFTFAHRZEUG**
METHOD FOR OPERATING AN ULTRASONIC SENSOR OF A DRIVER ASSISTANCE SYSTEM IN A MOTOR VEHICLE, DRIVER ASSISTANCE SYSTEM, AND MOTOR VEHICLE
PROCÉDÉ POUR FAIRE FONCTIONNER UN CAPTEUR À ULTRASONS D'UN SYSTÈME D'ASSISTANCE AU CONDUCTEUR DANS UN VÉHICULE AUTOMOBILE, SYSTÈME D'ASSISTANCE AU CONDUCTEUR ET VÉHICULE AUTOMOBILE

(30) Priorität: 03.08.2010 DE 102010033210
(43) Veröffentlichungstag der Anmeldung: 12.06.2013
(73) Patentinhaber: Valeo Schalter und Sensoren GmbH, 74321 Bietigheim-Bissingen (DE)
(72) Erfinder: HALLEK, Michael, 71717 Beilstein (DE); GRUEDL, Dietmar, 71679 Asperg (DE); LILL, Anton, 74348 Lauffen a. N. (DE); GOTZIG, Heinrich, 74357 Boennigheim (DE)
(74) Vertreter: Pothmann, Karsten
(86) Internationale Anmeldenummer: PCT/EP2011/062403
(87) Internationale Veröffentlichungsnummer: WO 2012/016828

(56) Entgegenhaltungen:
- EP-A1- 1 105 749
- EP-A2- 1 801 613
- DE-A1- 10 106 142
- US-A- 5 173 881
- US-A1- 2007 008 819

## Beschreibung

Die Erfindung betrifft ein Verfahren zum Betreiben zumindest eines Ultraschallsensors eines Fahrerassistenzsystems in einem Kraftfahrzeug. Es wird ein Ausgangsschallsignal des Ultraschallsensors gemäß einer Modulationsart moduliert, und durch diese Modulation wird ein spezifisches Codewort dem Ausgangsschallsignal aufgeprägt. Die Erfindung betrifft auch ein Fahrerassistenzsystem für ein Kraftfahrzeug, zum Bereitstellen von zumindest zwei Funktionalitäten in dem Kraftfahrzeug. Des Weiteren bezieht sich die Erfindung auf ein Kraftfahrzeug mit einem solchen Fahrerassistenzsystem.

Es ist Stand der Technik, das Ausgangsschallsignal eines Ultraschallsensors zu modulieren, so dass mit dem Ausgangsschallsignal ein spezifisches Codewort - nämlich eine Kennung - übertragen wird. Dieses Ausgangsschallsignal kann dann von anderen Störsignalen bzw. von Schallsignalen anderer Sensoren unterschieden werden. Auf diese Weise wird beispielsweise ein gleichzeitiger Betrieb mehrer Ultraschallsensoren ermöglicht. Jeder Ultraschallsensor sendet dann ein Ausgangsschallsignal mit einer zugeordneten spezifischen Kennung und kann dann das eigene Schallsignal wieder erkennen. Somit können also mehrere Ultraschallsensoren gleichzeitig betrieben werden.

Ein Verfahren zum gleichzeitigen Betreiben von mehreren Ultraschallsensoren ist beispielsweise aus der Druckschrift DE 101 06 142 A1 oder US2007008819 bekannt. Das Ausgangsschallsignal eines ersten Sensors wird linear frequenz-moduliert, nämlich aufwärts. Es entsteht somit ein linear modulierter Wellenimpuls (Chirp). Das Ausgangsschallsignal eines zweiten Sensors wird ebenfalls linear frequenz-moduliert, jedoch abwärts, d. h. die Frequenz wird über der Zeit verringert. Das Ausgangsschallsignal eines dritten Sensors wird ohne eine Frequenzmodulation ausgesandt. Somit können die Ausgangsschallsignale der Ultraschallsensoren voneinander unterschieden werden, nämlich nachdem diese Signale von fahrzeugexternen Objekten reflektiert werden.

Aus der Druckschrift EP 1 105 749 B1 ist ebenfalls ein Verfahren zum Betreiben einer Vielzahl von Ultraschallsensoren in einem Kraftfahrzeug bekannt. Auch hier werden die Ausgangsschallsignale unterschiedlicher Ultraschallsensoren mit einer eigenen Kennung versehen und können somit voneinander unterschieden werden. Die jeweilige Kennung der Ausgangsschallsignale wird zeitlich verändert. Somit können die empfangenen Schallsignale eindeutig den Ultraschallsensoren zugeordnet werden, wenn eine mögliche Störquelle ihre Kennung nicht exakt zeitlich genauso ändert. Somit wird die Wahrscheinlichkeit eines Fehlers bei der Zuordnung der Schallsignale zu den Ultraschallsensoren auf ein Minimum reduziert. Die zeitliche Änderung der Kennung kann beispielsweise zufällig erfolgen, nämlich mithilfe einer Zufallsfunktion.

Die Codierung eines Schallsignals eines Ultraschallsensors ist außerdem aus der Druckschrift DE 37 01 521 A1 bekannt.

An dem bekannten Stand der Technik ist als nachteilig der Umstand anzusehen, das die aufmodulieren Codewörter einen Einfluss auf die minimale Reichweite des Ultraschallsensors haben. Prinzipiell gilt, dass je weniger Wellenimpulse bzw. Wellenzüge durch einen Ultraschallsensor ausgesendet werden, desto geringer die minimale Reichweite sowie die maximale Reichweite des Ultraschallsensors sind. Entsprechend gilt, dass je größer die Anzahl der Wellenimpulse ist, desto größer die minimale und die maximale Reichweite des Ultraschallsensors sind. Mit der Anzahl der Wellenimpulse steigt nämlich auch die gesamte Energie des Ausgangsschallsignals. Wird nun mit jedem Wellenimpuls jeweils ein Bit eines Codewortes übertragen, so muss die Anzahl der ausgesandten Wellenimpulse mindestens gleich der Anzahl der Bits des Codewortes sein. Bei einem entsprechend langen Codewort muss somit eine entsprechende Vielzahl von Wellenimpulsen ausgesandt werden, und die minimale Reichweite des Ultraschallsensors wird nach unten begrenzt. Es kann zu Situationen kommen, bei denen der Ultraschallsensor Objekte nicht detektieren kann, die sich ganz nah am Ultraschallsensor bzw. in unmittelbarer Nähe des Sensors befinden. Wird hingegen ein kurzes Codewort gewählt, so steigt die Wahrscheinlich eines Fehlers bei der Zuordnung der empfangenen Ultraschallsignale zu den einzelnen Ultraschallsensoren. Die Problematik des gleichzeitigen Betriebes einer Vielzahl von Ultraschallsensoren wird somit im Stand der Technik nur unzureichend gelöst.

Es ist Aufgabe der Erfindung, einen Weg aufzuzeigen, wie bei einem Verfahren der eingangs genannten Gattung einerseits das Ausgangsschallsignal des Ultraschallsensors von Signalen anderer Sensoren unterschieden werden kann und andererseits der Ultraschallsensor bedarfsgerechter als im Stand der Technik betrieben werden kann.

Diese Aufgabe wird erfindungsgemäß durch ein Verfahren mit den Merkmalen gemäß Patentanspruch 1, wie auch durch ein Fahrerassistenzsystem mit den Merkmalen des Patentanspruchs 9 und durch ein Kraftfahrzeug mit den Merkmalen gemäß Patentanspruch 10 gelöst. Vorteilhafte Ausführungen der Erfindung sind Gegenstand der abhängigen Patentansprüche und der Beschreibung.

Ein erfindungsgemäßes Verfahren dient zum Betreiben zumindest eines Ultraschallsensors eines Fahrerassistenzsystems in einem Kraftfahrzeug. Es wird ein Ausgangsschallsignal des Ultraschallsensors gemäß einer Modulationsart moduliert, und durch diese Modulation wird ein spezifisches Codewort dem Ausgangsschallsignal aufgeprägt. Für zumindest zwei voneinander verschiedene Funktionalitäten des Fahrerassistenzsystems werden jeweils unterschiedliche Modulationsarten für die Modulation des Ausgangsschallsignals und/oder jeweils unterschiedlichen Längen des Codeworts verwendet.

Also ist erfindungsgemäß vorgesehen, dass das Fahrerassistenzsystem zumindest zwei verschiedene Funktionalitäten im Kraftfahrzeug bereitstellen kann und für diese zumindest zwei Funktionalitäten dem Ausgangsschallsignal ein Codewort mit jeweils unterschiedlicher Länge aufgeprägt wird und/oder das Ausgangsschallsignal jeweils auf unterschiedliche Arten moduliert wird. Die Erfindung macht sich die Tatsache zunutze, dass unterschiedliche Funktionalitäten eines Fahrerassistenzsystems - z. B. die Einparkhilfe, die Überwachung des Totwinkels, die automatische Abbremsfunktion und dergleichen -jeweils unterschiedliche minimale und maximale Reichweiten des Ultraschallsensors erfordern. Es werden somit für unterschiedliche minimale und maximale Reichweiten des Ultraschallsensors jeweils unterschiedliche Modulationsarten und/oder jeweils unterschiedliche Längen des Codeworts verwendet. Somit kann der Ultraschallsensor bedarfsgerechter als im Stand der Technik betrieben werden. Die Modulationsart und/oder die Länge des Codeworts wird nämlich an die momentan aktive Funktionalität des Fahrerassistenzsystems und somit an die erforderliche minimale und maximale Reichweite des Ultraschallsensors angepasst. Man würde beispielsweise bei einer Funktionalität, die eine geringe minimale Reichweite erfordert, ein entsprechend kurzes Codewort verwenden. Hingegen würde man bei einer Funktionalität, die eine große maximale Reichweite erfordert, eine entsprechend große Länge des Codeworts einstellen, um die Wahrscheinlichkeit eines Fehlers bei der Zuordnung des Schallsignals auf ein Minimum zu reduzieren. Entsprechend kann bei einer großen maximalen Reichweite eine robustere Modulationsart als bei einer geringen Reichweite verwendet werden.

Die Erfindung hat also den Vorteil, dass einerseits mehrere Ultraschallsensoren gleichzeitig betrieben werden können und die Signale unterschiedlicher Sensoren voneinander unterschieden werden können; andererseits werden die minimale und die maximale Reichweite des Ultraschallsensors durch das aufgeprägte Codewort nicht negativ beeinflusst. Es kann -je nach Wahl des Codewortes bzw. der Modulationsartsowohl eine relativ geringe minimale Reichweite als auch eine große maximale Reichweite des Sensors erreicht werden.

Die Modulationsarten und/oder die Längen des Codeworts sind bevorzugt für jede Funktionalität vorbestimmt und somit nicht zufällig. Das Codewort alleine kann prinzipiell ein zufälliges Codewort sein - dann ist dieses Codewort jedes Mal beim Aussenden des Ausgangsschallsignals unterschiedlich. Das Codewort kann aber auch ein dem Ultraschallsensor zugeordnetes festes bzw. vorbestimmtes Codewort sein.

Unter einem Codewort wird vorliegend eine Kennung verstanden, mit welcher das Ausgangsschallsignal des Ultraschallsensors versehen wird. Das Codewort ist bevorzugt eine Folge von Bits, die zusammen mit dem ausgesandten Ausgangsschallsignal übertragen werden. Unter einer Länge eines Codeworts wird hier insbesondere die Anzahl von Bits des Codeworts verstanden.

Das Ausgangsschallsignal umfasst bevorzugt eine vorbestimmte Folge von Wellenimpulsen bzw. Wellenzügen, die einer nach dem anderen ausgesendet werden. Jedem Wellenimpuls ist dann vorzugsweise zumindest ein Bit des Codeworts zugeordnet, d. h. mit jedem Wellenimpuls wird jeweils mindestens ein Bit übertragen. Die gesamte Folge von Wellenimpulsen wird ausgesendet und an einem fahrzeugexternen Objekt reflektiert, bevor sie als reflektiertes Signal wieder von dem Ultraschallsensor empfangen wird. Mittels einer Laufzeitmessung kann dann die Entfernung zum Objekt ermittelt werden.

In einer Ausführungsform ist vorgesehen, dass mindestens zwei Ultraschallsensoren jeweils ein Ausgangsschallsignal aussenden. Dann können den Ausgangsschallsignalen unterschiedlicher Ultraschallsensoren jeweils unterschiedliche Codewörter aufgeprägt werden. Auf diesem Wege gelingt es, die Ausgangsschallsignale unterschiedlicher Ultrasensoren voneinander zu unterscheiden, und die Ultraschallsensoren können gleichzeitig betrieben werden.

Bei zumindest zwei Ultraschallsensoren können die unterschiedlichen Codewörter die gleiche Länge aufweisen. Ergänzend oder alternativ können die Ausgangsschallsignale unterschiedlicher Ultraschallsensoren gemäß den gleichen Modulationsarten moduliert werden. Dann ist der Aufwand bei der Modulation bzw. der Codierung der Ausgangsschallsignale auf ein Minimum reduziert; es müssen lediglich für jede Funktionalität des Fahrerassistenzsystems Codewörter der gleichen Länge bereitgestellt werden und/oder es wird auf alle Ausgangsschallsignale die gleiche Modulation angewandt.

Also werden für zumindest zwei unterschiedliche Funktionalitäten des Fahrerassistenzsystems jeweils unterschiedliche Modulationsarten und/oder jeweils unterschiedliche Längen des Codeworts verwendet. Unter einer Funktionalität wird vorliegend insbesondere eine Anwendung bzw. ein Betriebsmodus des Fahrerassistenzsystems verstanden. Insbesondere werden unterschiedliche Funktionalitäten bei unterschiedlichen Straßensituationen bzw. Verkehrssituationen bereitgestellt. Durch jede Funktionalität wird also der Fahrer des Kraftfahrzeugs in jeweils einer anderen Straßensituation unterstützt.

Die zumindest zwei Funktionalitäten können beispielsweise zumindest zwei der folgenden Funktionalitäten umfassen:
- eine adaptive Geschwindigkeitsregelung (Adaptive Cruise Control, ACC),
- ein Überwachen eines Totwinkelbereichs des Kraftfahrzeugs (Blind Spot Detection, BSD),
- ein automatisches Abbremsen des Kraftfahrzeugs aufgrund eines in einer Umgebung des Kraftfahrzeugs erfassten Hindernisses (Ultrasonic Break Control, UBC),
- Ausgeben einer Information über einen Abstand zwischen dem Kraftfahrzeug und einem fahrzeugexternen Hindernis, insbesondere beim Parken (Einparkhilfe; Ultrasonic Park Assist, UPA),
- ein automatisches (autonomes) und/oder halbautomatisches (semi-autonomes) Ein- oder Ausparken mithilfe des Fahrerassistenzsystems - diese Funktionalität beinhaltet, dass durch das Fahrerassistenzsystem eine Parklücke vermessen wird und eine Parkbahn berechnet wird, entlang welcher das Kraftfahrzeug entweder durch den Fahrer gesteuert oder automatisch gesteuert in die Parklücke eingeparkt oder aus der der Parklücke ausgeparkt wird.

Gerade diese Funktionalitäten unterscheiden sich untereinander darin, dass jeweils unterschiedliche Reichweiten - nämlich minimale und maximale Reichweite - des Ultraschallsensors benötigt werden. Wird eine geringe minimale Reichweite benötigt, d. h. wenn Objekte ganz nah am Kraftfahrzeug erfasst werden sollen, so wird bevorzugt ein Codewort mit einer geringen Länge verwendet, nämlich beispielsweise ein Codewort mit 16 Bits. Dies ist beispielsweise bei der Einparkhilfe als einer Funktionalität des Fahrerassistenzsystems der Fall, bei welcher der Fahrer über die Entfernungen zwischen dem Kraftfahrzeug und fahrzeugexternen Objekten beim Einparken informiert wird. Diese fahrzeugexternen Objekte befinden sich beim Einparken in der Regel relativ nah an dem Kraftfahrzeug, so dass auch eine entsprechend geringe Länge für das Codewort festgelegt werden kann. Wird hingegen eine relativ große maximale Reichweite des Ultraschallsensors benötigt, so wird bevorzugt ein Codewort mit einer entsprechend größeren Länge verwendet, nämlich beispielsweise ein Codewort mit 64 Bits. Dann ist die abgestrahlte Energie ausreichend, um beispielsweise eine maximale Reichweite von 10 m zu erreichen. Diese relativ große maximale Reichweite wird beispielsweise beim automatischen Abbremsen benötigt, wenn fahrzeugexterne Objekte relativ früh erkannt werden sollen.

Also werden in einer Ausführungsform die Funktionalitäten des Fahrerassistenzsystems untereinander nach einer minimalen Reichweite, ab welcher fahrzeugexterne Objekte durch den Ultraschallsensor erfassbar sind, und/oder nach einer maximalen Reichweite unterschieden, bis welcher die Objekte erfassbar sind. Bei dieser Ausführungsform kann die Modulationsart und/oder die Länge des Codeworts für die jeweilige Funktionalität unter Berücksichtigung der minimalen Reichweite und/oder der maximalen Reichweite festgelegt werden. Gerade dann kommen die Vorteile der vorliegenden Erfindung vollständig zum Tragen; die Modulationsart und/oder die Länge des Codewortes kann/können an die jeweilige Reichweite angepasst werden, nämlich derart, dass die benötigte Reichweite des Ultraschallsensors nicht negativ beeinflusst wird.

Also kann für eine größere benötigte Reichweite des Ultraschallsensors ein Codewort mit einer relativ großen Länge und/oder eine robuste Modulationsart verwendet werden. Und umgekehrt kann bei einer kleineren benötigten Reichweite des Ultraschallsensors ein Codewort mit einer relativ geringen Länge und/oder eine weniger robuste Modulationsart verwendet werden. Als eine weniger robuste Modulationsart kann beispielsweise die Frequenzumtastung (Frequency Shift Keying, FSK) verwendet werden. Als eine robuste Modulationsart kann hingegen eine digitale Phasenmodulation, insbesondere die Quadraturphasenumtastung (Quadrature Phase Shift Keying, QPSK), verwendet werden.

Bezüglich der Länge des Codeworts können je nach Funktionalität des Fahrerassistenzsystems beispielsweise folgende Längen eingestellt werden: 16 Bits, 24 Bits, 32 Bits, 48 Bits, 64 Bits. Somit sind unterschiedliche Reichsweiten des Ultraschallsensors - nämlich für unterschiedliche Funktionalitäten - abgedeckt.

Es kann beispielsweise die folgende Tabelle gelten:

| Funktionalität bzw. Betriebsmodus | Parkhilfe | ACC | Totwinkel-Überwachung | automatisches Abbremsen | automatisches Einparken |
|---|---|---|---|---|---|
| minimale Reichweite [m] | 0,15-0,20 | 0,20-0,30 | 0,30-0,50 | 0,40-0,60 | 0,30-0,40 |
| Maximale Reichweite [m] | 2,5 | 4 | 8 | 10 | 6 |
| Modulationsart | FSK | FSK | QPSK | QPSK | FSK |
| Länge des Codewortes (Bitanzahl) | 16 | 24 | 48 | 64 | 32 |

Erfindungsgemäß wird darüber hinaus ein Fahrerassistenzsystem für ein Kraftfahrzeug bereitgestellt, nämlich zum Bereitstellen von zumindest zwei unterschiedlichen Funktionalitäten in dem Kraftfahrzeug. Das Fahrerassistenzsystem umfasst zumindest einen Ultraschallsensor und eine Steuereinrichtung zum Ansteuern des Ultraschallsensors. Die Steuereinrichtung kann den Ultraschallsensor zum Aussenden eines gemäß einer Modulationsart modulierten Ausgangsschallsignals mit einem aufgeprägten spezifischen Codewort veranlassen. Die Steuereinrichtung ist dazu ausgelegt, für zumindest zwei voneinander verschiedene Funktionalitäten des Fahrerassistenzsystems jeweils unterschiedliche Modulationsarten für die Modulation des Ausgangsschallsignals und/oder jeweils unterschiedliche Längen des Codeworts zu verwenden.

Ein erfindungsgemäßes Kraftfahrzeug umfasst ein erfindungsgemäßes Fahrerassistenzsystem.

Die mit Bezug auf das erfindungsgemäße Verfahren vorgestellten bevorzugten Ausführungsformen und deren Vorteile gelten entsprechend für das erfindungsgemäße Fahrerassistenzsystem und das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug mit einem Fahrerassistenzsystem gemäß einer Ausführungsform der Erfindung,
- Fig. 2: ein Blockdiagramm des Fahrerassistenzsystems gemäß Fig. 1, wobei zur Erläuterung der Funktion des Fahrerassistenzsystems lediglich ein Ultraschallsensor dargestellt ist; und
- Fig. 3: einen beispielhaften zeitlichen Verlauf eines Ausgangsschallsignals des Ultraschallsensors.

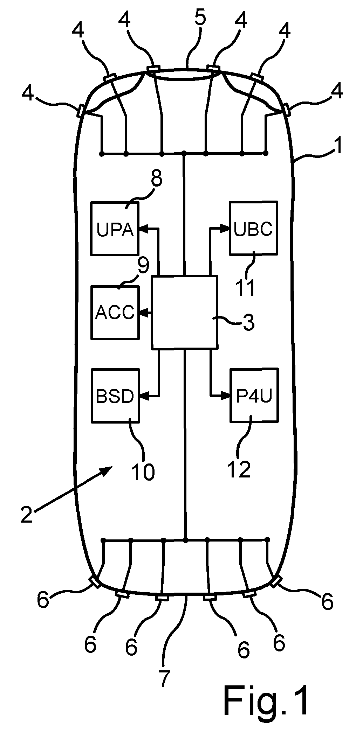

Ein in Fig. 1 in schematischer und höchst abstrakter Darstellung gezeigtes Kraftfahrzeug 1 kann beispielsweise ein Personenkraftwagen sein. Das Kraftfahrzeug 1 umfasst ein Fahrerassistenzsystem 2, welches im Kraftfahrzeug 1 unterschiedlichste Funktionalitäten bereitstellt, mit denen ein Fahrer beim Führen des Kraftfahrzeugs 1 unterstützt wird. Das Fahrerassistenzsystem 2 umfasst eine Steuereinrichtung 3, die mindestens einen Mikrocontroller und/oder mindestens einen digitalen Signalprozessor und/oder mindestens einen Speicher umfassen kann.

Das Fahrerassistenzsystem 2 umfasst auch eine Vielzahl von Ultraschallsensoren, nämlich mehrere Ultraschallsensoren 4, die an einem vorderen Stoßfänger 5 des Kraftfahrzeugs 1 angebracht sind, wie auch mehrere Ultraschallsensoren 6, die an einem hinteren Stoßfänger 7 angebracht sind. Die Anzahl sowie die Anordnung der Ultraschallsensoren 4, 6 sind in Fig. 1 lediglich beispielhaft; sowohl die Anzahl als auch die Anordnung der Ultraschallsensoren 4, 6 kann je nach Ausführung des Fahrerassistenzsystems 2 unterschiedlich sein. Die Ultraschallsensoren 4, 6 sind mit der Steuereinrichtung 3 gekoppelt und werden durch die Steuereinrichtung 3 angesteuert.

Die Steuereinrichtung 3 stellt verschiedenste Funktionalitäten bereit, nämlich in Abhängigkeit von Messdaten der Ultraschallsensoren 4, 6. Und zwar können beispielsweise folgende Funktionalitäten durch das Fahrerassistenzsystem bereitgestellt werden:
- Adaptive Geschwindigkeitsregelung (ACC),
- Überwachung des Totwinkelbereichs des Kraftfahrzeugs 1 (Blind Spot Detection, BSD),
- automatisches Abbremsen des Kraftfahrzeugs 1 aufgrund eines erfassten Hindernisses bzw. nach Erkennung einer Situation, in welcher eine Kollision zwischen dem Kraftfahrzeug 1 und einem fahrzeugexternen Hindernis bevorsteht (Ultrasonic Brake Control, UBC),
- Ausgeben von Informationen über einen Abstand zwischen dem Kraftfahrzeug 1 und einem fahrzeugexternen Hindernis, insbesondere beim Einparken (Ultrasonic Park Assist, UPA), und
- automatisches Ein- und/oder Ausparken, bei welchem zunächst eine Parklücke durch das Fahrerassistenzsystem 2 vermessen wird (beispielsweise Park For You, P4U).

Also kann das Fahrerassistenzsystem 2 unterschiedliche Funktionalitäten 8 bis 12 bereitstellen, nämlich die UPA, ACC, BSD, UBC, P4U.

Die genannten Funktionalitäten 8 bis 12 stellen im Prinzip verschiedene Betriebsmodi des Fahrerassistenzsystems 2 dar.

Vor dem Bereitstellen einer jeden Funktionalität 8 bis 12 bzw. vor dem Aktivieren eines jeden Betriebsmodus wird jedem Ultraschallsensor 4, 6 jeweils ein unterschiedliches Codewort, also eine spezifische Kennung zugewiesen. Somit erhalten die Ultraschallsensoren 4, 6 jeweils unterschiedliche Codewörter und können gleichzeitig betrieben werden. Die einzelnen Codewörter können fest zugewiesene bzw. vorbestimmte Codewörter oder aber jeweils zufällig gewählte Codewörter sein. Auf diese Weise wird es möglich, die Signale unterschiedlicher Ultraschallsensoren 4, 6 einerseits voneinander und andererseits auch von anderen fahrzeugexternen Störquellen zu unterscheiden.

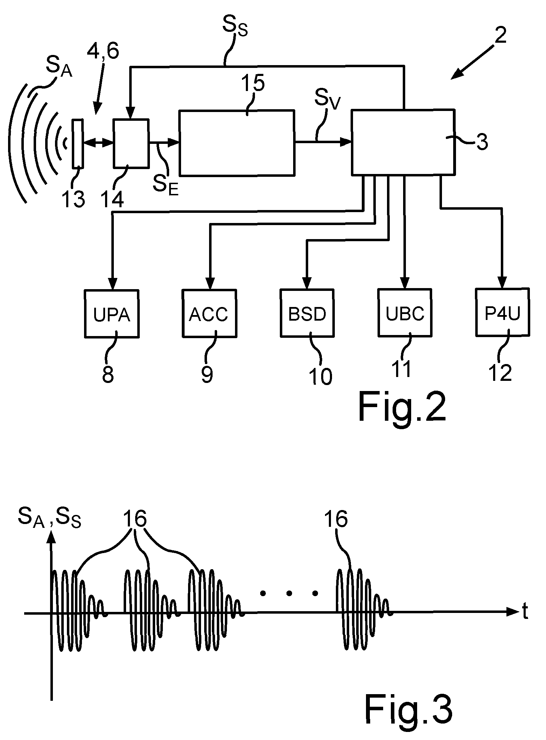

In Fig. 2 ist das Fahrerassistenzsystem 2 mit einem einzelnen Ultraschallsensor 4, 6 dargestellt. Anhand von Fig. 2 wird nun die Funktionsweise des Fahrerassistenzsystems 2 näher erläutert: Der Ultraschallsensor 4, 6 umfasst eine - beispielsweise aus Aluminium ausgebildete - Membran 13 sowie eine Anregungseinrichtung 14. Die Anregungseinrichtung 14 kann beispielsweise ein Piezoelement beinhalten, welches unter Einfluss einer elektrischen Wechselspannung in eine Schwingung gebracht werden kann. Das Piezoelement kann auch elektrische Spannung erzeugen, nämlich aufgrund einer Schwingung. Durch die Anregungseinrichtung 14 wird die Membran 13 mechanisch angeregt. Eine angeregte Membran erzeugt dann ein Ausgangsschallsignal S_{A}.

Mit der Anregungseinrichtung 14 ist ein Empfänger 15 gekoppelt. Die Anregungseinrichtung 14 gibt Empfangssignale S_{E} - hier eine elektrische Wechselspannung - an den Empfänger 15 aus. Der Empfänger 15 kann die Empfangssignale S_{E} verarbeiten, nämlich beispielsweise verstärken und/oder filtern und dergleichen. Diese verarbeiteten Signale S_{V} übermittelt der Empfänger 15 an die Steuereinrichtung 3. Die Steuereinrichtung 3 kann auf Grundlage der Signale S_{V} eine Entfernung zwischen detektierten Objekten und dem Ultraschallsensor 4, 6 erfassen und auf Grundlage dieser Entfernungen die Funktionalitäten 8 bis 12 bereitstellen. Die Steuereinrichtung 3 kann auch die Anregungseinrichtung 14 ansteuern, nämlich unter Ausgabe entsprechender Steuersignale Sₛ. Also kann die Steuereinrichtung 3 durch entsprechende Ansteuerung der Anregungseinrichtung 14 eine Anregung der Membran 13 veranlassen, um eine Entfernung eines Objekts von dem Ultraschallsensor 4, 6 zu messen.

Wie bereits ausgeführt, wird jedem Sensor 4, 6 jeweils ein unterschiedliches Codewort zugewiesen. Das Codewort wird dem Ausgangsschallsignal S_{A} aufgeprägt und mit dem Ausgangsschallsignal S_{A} übertragen. Dazu wird das Ausgangsschallsignal S_{A} entsprechend moduliert. Diese Modulation erfolgt derart, dass zunächst das Steuersignal Sₛ - also elektrische Spannung - entsprechend moduliert und das Codewort dem Steuersignal Sₛ aufgeprägt wird. Wird dann ein reflektierter Schall wieder empfangen, so beinhaltet auch das Empfangssignal S_{E} das zugewiesene Codewort, und die Steuereinrichtung 3 kann feststellen, ob das Empfangssignal S_{E} dem Ultraschallsensor 4, 6 zugeordnet ist oder nicht.

In Fig. 3 ist ein beispielhafter Verlauf des Ausgangsschallsignals S_{A} bzw. des Steuersignals Sₛ über der Zeit t dargestellt. Das Ausgangsschallsignal S_{A} beinhaltet eine Vielzahl von Wellenimpulsen bzw. Wellenzügen 16, die einer nach dem anderen ausgesendet werden. Werden alle Wellenimpulse 16 ausgesendet, so wird gewartet, bis der reflektierte Schall wieder am Ultraschallsensor 4, 6 ankommt. Für eine einzelne Messung wird somit eine vorbestimmte Folge von Wellenimpulsen 16 ausgesendet. Die Wellenimpulse 16 werden an einem fahrzeugexternen Objekt reflektiert, und die reflektierten Wellenimpulse 16 werden vom Ultraschallsensor 4, 6 empfangen. Entsprechend beinhaltet auch das Empfangssignal S_{E} eine Vielzahl von Wellenimpulsen 16.

Mit jedem Wellenimpuls 16 wird mindestens ein Bit des zugewiesenen Codewortes übertragen. Dazu kann auf die Wellenimpulse 16 beispielsweise die Frequenzumtastung (FSK) oder aber die Quadraturphasenumtastung (QPSK) angewandt werden. Für die unterschiedlichsten Funktionalitäten 8 bis 12 bzw. Betriebsmodi des Fahrerassistenzsystems 2 werden auch unterschiedliche Reichweiten der Ultraschallsensoren 4, 6 benötigt. Für manche Funktionalitäten 8 bis 12 werden geringe minimale Reichweiten benötigt; bei anderen Funktionalitäten 8 bis 12 wird eine relativ große maximale Reichweite benötigt. Die minimale Reichweite definiert die Entfernung, ab welcher der Ultraschallsensor 4, 6 Objekte detektieren kann. Hingegen definiert die maximale Reichweite eine Entfernung, bis zu welcher der Ultraschallsensor 4, 6 Objekte detektieren kann. Es gilt im Prinzip, dass je größer die Anzahl der Wellenimpulse 16 ist, desto größer die minimale und die maximale Reichweite der Ultraschallsensoren 4, 6 ist. Es ist prinzipiell nicht möglich, eine sehr geringe minimale Reichweite und eine sehr große maximale Reichweite zu erreichen. Wird die maximale Reichweite vergrößert, so vergrößert sich automatisch auch die minimale Reichweite. Und umgekehrt, verringert man die minimale Reichweite, so verringert sich auch die maximale Reichweite. Dies ist darauf zurückzuführen, dass bei einer großen Anzahl von Wellenimpulsen 16 eine insgesamt größere Energie als bei einer geringeren Anzahl von Wellenimpulsen 16 ausgesendet wird. Um nun diese Abhängigkeit zu berücksichtigen, werden für unterschiedliche Funktionalitäten 8 bis 12 und somit auch für unterschiedliche benötigte Reichweiten der Ultraschallsensoren 4, 6 jeweils unterschiedliche Längen der Codewörter verwendet. Für die Funktionalitäten 8 bis 12 werden auch zwei unterschiedliche Modulationsarten verwendet, nämlich einerseits die FSK und andererseits die robustere QPSK.

Die nachfolgende Tabelle enthält die jeweiligen Bitlängen der Codewörter zugeordnet zu der verwendeten Modulationsart sowie der benötigten minimalen und maximalen Reichweite, welche für die jeweilige Funktionalität 8 bis 12 erreicht werden soll.

| Funktionalität | UPA | ACC | BSD | UBC | P4U |
|---|---|---|---|---|---|
| minimale Reichweite [m] | 0,15-0,20 | 0,20-0,30 | 0,30-0,50 | 0,40-0,60 | 0,30-0,40 |
| Maximale Reichweite [m] | 2,5 | 4 | 8 | 10 | 6 |
| Modulationsart | FSK | FSK | QPSK | QPSK | FSK |
| Länge des Codewortes | 16 Bits | 24 Bits | 48 Bits | 64 Bits | 32 Bits |

Prinzipiell können allen Ultraschallsensoren 4, 6 Codewörter mit der gleichen Länge zugewiesen werden, und die Ausgangsschallsignale S_{A} aller Ultraschallsensoren 4, 6 können jeweils gemäß der gleichen Modulationsart moduliert werden. Es ist jedoch auch möglich, dass unterschiedliche Ultraschallsensoren 4, 6 Codewörter unterschiedlicher Länge enthalten und/oder die Ausgangsschallsignale S_{A} unterschiedlicher Ultraschallsensoren 4, 6 gemäß unterschiedlichen Modulationsarten moduliert werden.

Die Anpassung der Codewörter an die jeweilige Funktionalität 8 bis 12 hat den Vorteil, dass einerseits sehr geringe minimale Reichweiten der Ultraschallsensoren 4, 6 erreicht werden können und dennoch die Ultraschallsensoren 4, 6 gleichzeitig betrieben werden können und andererseits bei einer relativ großen maximalen Reichweite und somit bei einer relativ großen Länge des Codeworts die Wahrscheinlichkeit eines Fehlers bei der Zuordnung der Ausgangsschallsignale S_{A} zu den jeweiligen Ultraschallsensoren 4, 6 auf ein Minimum reduziert wird.

## Patentansprüche

1. Verfahren zum Betreiben zumindest eines Ultraschallsensors (4, 6) eines Fahrerassistenzsystems (2) in einem Kraftfahrzeug (1), wobei ein Ausgangsschallsignal (S_{A}) des Ultraschallsensors (4, 6) gemäß einer Modulationsart moduliert wird und durch diese Modulation ein spezifisches Codewort dem Ausgangsschallsignal (S_{A}) aufgeprägt wird,
**dadurch gekennzeichnet, dass**
für zumindest zwei voneinander verschiedene Funktionalitäten (8 bis 12) des Fahrerassistenzsystems (2) jeweils unterschiedliche Modulationsarten für die Modulation des Ausgangsschallsignals (S_{A}) und/oder jeweils unterschiedliche Längen des Codeworts verwendet werden.

2. Verfahren nach Anspruch 1,
**dadurch gekennzeichnet, dass**
zumindest zwei Ultraschallsensoren (4, 6) jeweils ein Ausgangsschallsignal (S_{A}) aussenden und den Ausgangsschallsignalen (S_{A}) unterschiedlicher Ultraschallsensoren (4, 6) jeweils unterschiedliche Codewörter aufgeprägt werden.

3. Verfahren nach Anspruch 2,
**dadurch gekennzeichnet, dass**
die unterschiedlichen Codewörter die gleiche Länge aufweisen und/oder die Ausgangsschallsignale (S_{A}) unterschiedlicher Ultraschallsensoren (4, 6) gemäß der gleichen Modulationsart moduliert werden.

4. Verfahren nach einem der vorhergehenden Ansprüche,
**dadurch gekennzeichnet, dass**
für zumindest zwei der folgenden Funktionalitäten (8 bis 12) des Fahrerassistenzsystems (2) jeweils unterschiedliche Modulationsarten und/oder jeweils unterschiedliche Längen des Codeworts verwendet werden:
- adaptive Geschwindigkeitsregelung und/oder
- Überwachen eines Totwinkelbereichs des Kraftfahrzeugs (1) und/oder
- automatisches Abbremsen des Kraftfahrzeugs (1) aufgrund eines erfassten Hindernisses und/oder
- Ausgeben einer Information über einen Abstand zwischen dem Kraftfahrzeug (1) und einem fahrzeugexternen Hindernis, insbesondere beim Parken, und/oder
- automatisches Ein- und/oder Ausparken mithilfe des Fahrerassistenzsystems (2).

5. Verfahren nach einem der vorhergehenden Ansprüche,
**dadurch gekennzeichnet, dass**
die Funktionalitäten (8 bis 12) des Fahrerassistenzsystems (2) untereinander nach einer minimalen Reichweite, ab welcher fahrzeugexterne Objekte durch den zumindest einen Ultraschallsensor (4, 6) erfassbar sind, und/oder nach einer maximalen Reichweite, bis welcher die Objekte erfassbar sind, unterschieden werden und unter Berücksichtigung der minimalen Reichweite und/oder der maximalen Reichweite die Modulationsart und/oder die Länge des Codewortes für die jeweilige Funktionalität (8 bis 12) festgelegt wird.

6. Verfahren nach einem der vorhergehenden Ansprüche,
**dadurch gekennzeichnet, dass**
für zumindest eine Funktionalität (8 bis 12) des Fahrerassistenzsystems (2) die Frequenzumtastung als Modulationsart verwendet wird.

7. Verfahren nach einem der vorhergehenden Ansprüche,
**dadurch gekennzeichnet, dass**
für zumindest eine Funktionalität (8 bis 12) des Fahrerassistenzsystems (2) eine digitale Phasenmodulation, insbesondere die Quadraturphasenumtastung, verwendet wird.

8. Verfahren nach einem der vorhergehenden Ansprüche,
**dadurch gekennzeichnet, dass**
zumindest zwei der folgenden Längen des Codewortes jeweils für zumindest eine Funktionalität (8 bis 12) des Fahrerassistenzsystems (2) verwendet wird:
- 16 Bits,
- 24 Bits,
- 32 Bits,
- 48 Bits,
- 64 Bits.

9. Fahrerassistenzsystem (2) für ein Kraftfahrzeug (1), zum Bereitstellen von zumindest zwei Funktionalitäten (8 bis 12) in dem Kraftfahrzeug (1), mit zumindest einem Ultraschallsensor (4, 6) und mit einer Steuereinrichtung (3) zum Ansteuern des Ultraschallsensors (4, 6), welche dazu ausgelegt ist, den Ultraschallsensor (4, 6) zum Aussenden eines gemäß einer Modulationsart modulierten Ausgangsschallsignals (S_{A}) mit einem aufgeprägten spezifischen Codewort zu veranlassen,
**dadurch gekennzeichnet, dass**
die Steuereinrichtung (3) dazu ausgelegt ist, für zumindest zwei voneinander verschiedene Funktionalitäten (8 bis 12) des Fahrerassistenzsystems (2) jeweils unterschiedliche Modulationsarten für die Modulation des Ausgangsschallsignals (S_{A}) und/oder jeweils unterschiedliche Längen des Codeworts zu verwenden.

10. Kraftfahrzeug (1) mit einem Fahrerassistenzsystem (2) nach Anspruch 9.

## Claims

1. Method for operating at least one ultrasonic sensor (4, 6) of a driver assistance system (2) in a motor vehicle (1), wherein an output sound signal (S_{A}) of an ultrasonic sensor (4, 6) is modulated in accordance with a type of modulation and by means of this modulation, a specific codeword is impressed on the output sound signal (S_{A}),
**characterized in that**
for at least mutually different functionalities (8 to 12) of the driver assistance system (2), different types of modulation are in each case used for the modulation of the output sound signal (S_{A}) and/or in each case different lengths of the codeword.

2. Method according to Claim 1,
**characterized in that**
at least two ultrasonic sensors (4, 6) in each case emit one output sound signal (S_{A}) and in each case different codewords are impressed on the output sound signals (S_{A}) of different ultrasonic sensors (4, 6).

3. Method according to Claim 2,
**characterized in that**
the different codewords have the same length and/or the output sound signals (S_{A}) of different ultrasonic sensors (4, 6) are modulated in accordance with the same type of modulation.

4. Method according to one of the preceding claims, **characterized in that**
for at least two of the following functionalities (8 to 12) of the driver assistance system (2), in each case different types of modulation and/or in each case different lengths of the codeword are used:
- adaptive cruise control and/or
- monitoring of a blind spot area of the motor vehicle (1) and/or
- automatic braking of the motor vehicle (1) due to a detected obstacle and/or
- outputting of information about a distance between the motor vehicle (1) and a vehicle-external obstacle, especially during parking, and/or
- automatic parking and/or pulling out with the aid of the driver assistance system (2).

5. Method according to one of the preceding claims, **characterized in that**
the functionalities (8 to 12) of the driver assistance system (2) can be distinguished from one another in accordance with a minimum range above which vehicle-external objects can be detected by the at least one ultrasonic sensor (4, 6) and/or in accordance with a maximum range up to which the objects are detectable, and, taking into consideration the minimum range and/or the maximum range, the type of modulation and/or the length of the codeword is specified for the respective functionality (8 to 12).

6. Method according to one of the preceding claims, **characterized in that**
for at least one functionality (8 to 12) of the driver assistance system (2), frequency shift keying is used as type of modulation.

7. Method according to one of the preceding claims, **characterized in that**
for at least one functionality (8 to 12) of the driver assistance system (2), a digital phase modulation, especially quadrature phase shift keying, is used.

8. Method according to one of the preceding claims, **characterized in that**
at least two of the following lengths of the codeword are in each case used for at least one functionality (8 to 12) of the driver assistance system (2):
- 16 bits,
- 24 bits,
- 32 bits,
- 48 bits,
- 64 bits.

9. Driver assistance system (2) for a motor vehicle (1) for providing at least two functionalities (8 to 12) in the motor vehicle (1), having at least one ultrasonic sensor (4, 6) and having a controller (3) for driving the ultrasonic sensor (4, 6), which is designed for causing the ultrasonic sensor (4, 6) to emit an output sound signal (S_{A}), modulated in accordance with a type of modulation, with an impressed specific codeword,
**characterized in that**
the controller (3) is designed for using for at least two mutually different functionalities (8 to 12) of the driver assistance system (2) in each case different types of modulation for the modulation of the output sound signal (S_{A}) and/or in each case different lengths of the codeword.

10. Motor vehicle (1) having a driver assistance system (2) according to Claim 9.

## Revendications

1. Procédé de mise en fonctionnement d'au moins un capteur à ultrasons (4, 6) d'un système d'aide à la conduite (2) dans un véhicule automobile (1), dans lequel un signal ultrasonore de sortie (S_{A}) du capteur à ultrasons (4, 6) est modulé conformément à un type de modulation et un dans lequel un mot de code spécifique est appliqué audit signal sonore de sortie (S_{A}) au moyen de ladite modulation,
**caractérisé en ce que**, pour au moins deux fonctionnalités différentes l'une de l'autre (8 à 12) du système à d'aide à la conduite (2), des types de modulation différents respectifs sont utilisés pour la modulation du signal sonore de sortie (S_{A}) et/ou pour des longueurs différentes respectives du mot de code.

2. Procédé selon la revendication 1,
**caractérisé en ce qu'**au moins deux capteurs à ultrasons (4, 6) émettent respectivement un signal sonore de sortie (S_{A}) et **en ce que** des mots de code différents respectifs sont appliqués aux signaux sonores de sortie (S_{A}) de différents capteurs à ultrasons (4, 6).

3. Procédé selon la revendication 2,
**caractérisé en ce que** les différents mots de code présentent les mêmes longueurs et/ou les signaux sonores de sortie (S_{A}) de différents capteurs à ultrasons (4, 6) sont modulés conformément au même type de modulation.

4. Procédé selon l'une quelconque des revendications précédentes,
**caractérisé en ce que**, pour au moins deux des fonctionnalités suivantes (8 à 12) du système d'aide à la conduite (2), des types de modulation différents respectifs et/ou des longueurs différentes respectives du mot de code sont utilisés :
- régulation adaptative de la vitesse et/ou
- surveillance d'une région d'angle mort du véhicule automobile (1), et/ou
- freinage automatique du véhicule automobile (1) en raison d'un obstacle détecté, et/ou
- fourniture d'une information concernant la distance entre le véhicule automobile (1) et un obstacle extérieur au véhicule, notamment lors du stationnement, et/ou
- entrée et/ou sortie automatique d'une place de stationnement à l'aide du système d'aide à la conduite (2).

5. Procédé selon l'une quelconque des revendications précédentes,
**caractérisé en ce que** les fonctionnalités (8 à 12) du système d'aide à la conduite (2) se différencient les unes des autres conformément à une portée minimale à partir de laquelle des objets extérieurs au véhicule peuvent être détectés au moyen de l'au moins un capteur à ultrasons (4, 6), et/ou en fonction d'une portée maximale jusqu'à laquelle les objets peuvent être détectés, et le type de modulation et/ou la longueur du mot de code correspondant à la fonctionnalité respective (8 à 12) est/sont établie(s) en tenant compte de la portée minimale et/ou de la portée maximale.

6. Procédé selon l'une quelconque des revendications précédentes,
**caractérisé en ce que**, pour au moins une fonctionnalité (8 à 12) du système d'aide à la conduite (2), un balayage en fréquence est utilisé en tant que type de modulation.

7. Procédé selon l'une quelconque des revendications précédentes,
**caractérisé en ce que**, pour au moins une fonctionnalité (8 à 12) du système d'aide à la conduite (2), une modulation de phase numérique, notamment un balayage en quadrature de phase, est utilisée.

8. Procédé selon l'une quelconque des revendications précédentes,
**caractérisé en ce qu'**au moins deux des longueurs suivantes du mot de code sont respectivement utilisées pour au moins une fonctionnalité (8 à 12) du système d'aide à la conduite (2) :
- 16 bits,
- 24 bits,
- 32 bits,
- 48 bits,
- 64 bits.

9. Système d'aide à la conduite (2) pour un véhicule automobile (1), destiné à fournir au moins deux fonctionnalités (8 à 12) dans le véhicule automobile (1), comportant au moins un capteur à ultrasons (4, 6) et un dispositif de commande (3) destiné à commander le capteur à ultrasons (4, 6), qui est conçu pour déclencher l'émission par le capteur à ultrasons (4, 6) d'un signal sonore de sortie (S_{A}) modulé conformément à un type de modulation avec application d'un mot de code spécifique,
**caractérisé en ce que** le dispositif de commande (3) est conçu pour utiliser, pour au moins deux fonctionnalités différentes l'une de l'autre (8 à 12) du système d'aide à la conduite (2) des types de modulation respectifs différents pour la modulation du signal sonore de sortie (S_{A}) et/ou des longueurs différentes respectives du mot de code.

10. Véhicule automobile (1) comportant un système d'aide à la conduite (2) selon la revendication 9.
